(19) Europäisches Patentamt
European Patent Office
Office européen des brevets

(11) **EP 3 404 062 A1**

(12) **EUROPEAN PATENT APPLICATION**
published in accordance with Art. 153(4) EPC

(43) Date of publication:
**21.11.2018 Bulletin 2018/47**

(21) Application number: **17747254.5**

(22) Date of filing: **24.01.2017**

(51) Int Cl.:
*C08L 21/00* (2006.01)
*B60C 1/00* (2006.01)
*C08K 7/02* (2006.01)
*B29D 30/52* (2006.01)
*C08J 3/20* (2006.01)

(86) International application number:
**PCT/JP2017/002224**

(87) International publication number:
**WO 2017/135095 (10.08.2017 Gazette 2017/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.02.2016 JP 2016019031**

(71) Applicant: **Sumitomo Rubber Industries, Ltd.**
**Kobe-shi, Hyogo 651-0072 (JP)**

(72) Inventors:
• **KASAI, Yuki**
  **Kobe-shi**
  **Hyogo 651-0072 (JP)**

• **OTSUKI, Hirotoshi**
  **Kobe-shi**
  **Hyogo 651-0072 (JP)**
• **YOKOYAMA, Yuka**
  **Kobe-shi**
  **Hyogo 651-0072 (JP)**
• **MUKOUGUCHI, Daiki**
  **Kobe-shi**
  **Hyogo 651-0072 (JP)**

(74) Representative: **Manitz Finsterwald Patentanwälte PartmbB**
**Martin-Greif-Strasse 1**
**80336 München (DE)**

(54) **STUDLESS WINTER TIRE AND METHOD FOR PRODUCING SAME**

(57) The present invention provides a studless winter tire having excellent performance on ice. The present invention relates to a studless winter tire including a tread formed from a rubber vulcanizate, the rubber vulcanizate containing a rubber component, and a short fiber with a degree of fibrillation of 50 to 95%.

EP 3 404 062 A1

**Description**

TECHNICAL FIELD

The present invention relates to a studless winter tire and a method for producing the studless winter tire.

BACKGROUND ART

Studded tires have been prohibited by law for the purpose of preventing dust pollution caused by studded tires. This has led to the use of studless winter tires in place of studded tires in cold regions.
The materials and structure of studless winter tires are specially designed to handle icy and snowy roads with rougher surfaces than normal roads. For example, Patent Literature 1 proposes the incorporation of short fibers to enhance performance on ice. However, the performance on ice achieved by this technique falls short of that of studded tires, and thus further improvement in performance on ice has been desired.

CITATION LIST

PATENT LITERATURE

Patent Literature 1: JP 2000-168315 A

SUMMARY OF INVENTION

TECHNICAL PROBLEM

The present invention aims to solve the above problem and provide a studless winter tire having excellent performance on ice.

SOLUTION TO PROBLEM

The present invention relates to a studless winter tire, including a tread formed from a rubber vulcanizate, the rubber vulcanizate containing: a rubber component; and a short fiber with a degree of fibrillation of 50 to 95%.
The short fiber is preferably a nylon fiber.
The short fiber is preferably present in an amount of 1 to 50 parts by mass per 100 parts by mass of the rubber component.
The present invention also relates to a method for producing the studless winter tire, the method including preparing the rubber vulcanizate by a process including: a first final kneading step that includes kneading the rubber component with a vulcanizing agent; and a second final kneading step that includes adding the short fiber to a kneaded mixture obtained in the first final kneading step and kneading them.
In the second final kneading step, the short fiber is preferably added in multiple portions.

ADVANTAGEOUS EFFECTS OF INVENTION

The tread in the studless winter tire of the present invention is formed from a rubber vulcanizate containing a short fiber with a degree of fibrillation that falls within a predetermined range. Thus, the studless winter tire provides excellent performance on ice.

DESCRIPTION OF EMBODIMENTS

The studless winter tire of the present invention includes a tread formed from a rubber vulcanizate. The rubber vulcanizate contains a rubber component and a short fiber with a degree of fibrillation of 50 to 95%.
In the present invention, the degree of fibrillation of the short fiber is adjusted to fall within the specified range in order to retain a moderate amount of fiber pieces in the rubber vulcanizate. This enhances the scratching effect and water repellent effect of the short fiber. Further, the use of the short fiber with a degree of fibrillation adjusted to fall within the specified range improves the flexibility of the rubber vulcanizate, thereby enhancing the conformity to the ice surface. Owing to these effects, the studless winter tire has improved performance on ice.
Examples of the rubber component include diene rubbers such as natural rubber (NR), epoxidized natural rubber (ENR), polyisoprene rubber (IR), polybutadiene rubber (BR), styrene-butadiene rubber (SBR), acrylonitrile butadiene rubber (NBR), chloroprene rubber (CR), butyl rubber (IIR), and styrene-isoprene-butadiene copolymer rubber (SIBR). Among these, NR or BR is preferred because they provide good performance on ice.

Non-limiting examples of NR include SIR20, RSS#3, and TSR20.

The amount of NR based on 100% by mass of the rubber component is preferably 20% by mass or more, more preferably 40% by mass or more, still more preferably 50% by mass or more, but is preferably 90% by mass or less, more preferably 80% by mass or less, still more preferably 70% by mass or less. An amount of NR within the range indicated above will provide good performance on ice.

Non-limiting examples of BR include high-cis BR such as BR1220 available from Zeon Corporation, and BR130B and BR150B both available from Ube Industries, Ltd.; and BR containing syndiotactic polybutadiene crystals such as VCR412 and VCR617 both available from Ube Industries, Ltd. In particular, BR having a cis content of 90% by mass or higher is preferred.

The amount of BR based on 100% by mass of the rubber component is preferably 10% by mass or more, more preferably 20% by mass or more, still more preferably 30% by mass or more, but is preferably 80% by mass or less, more preferably 60% by mass or less, still more preferably 50% by mass or less. An amount of BR within the range indicated above will provide good performance on ice.

Examples of the short fiber include non-metallic inorganic short fibers such as glass fibers and carbon fibers, and non-metallic organic short fibers such as cellulose fibers, rayon fibers, acrylic fibers, polyester fibers, nylon fibers, aromatic polyamide fibers, urethane fibers, and aramid fibers. Among these, non-metallic organic short fibers are preferred, with nylon fibers being more preferred, because they are highly effective in improving performance on ice. Examples of nylon materials that may form nylon fibers include nylon 6, nylon 66, nylon 6-nylon 66 copolymers, nylon 610, nylon 612, nylon 46, nylon 11, nylon 12, and nylon MXD6.

The degree of fibrillation of the short fiber is 50% or more, preferably 60% or more, more preferably 70% or more. Short fibers with a degree of fibrillation of less than 50% may not sufficiently exhibit the effect of improving performance on ice. The degree of fibrillation of the short fiber is 95% or less, preferably 90% or less, more preferably 80% or less. If the degree of fibrillation is more than 95%, the amount of fiber pieces in the rubber vulcanizate may decrease so that the effect of improving performance on ice may not be sufficiently provided.

The degree of fibrillation of the short fiber is determined from the number of grids remaining in a prepared rubber vulcanizate. Generally, one short fiber originally has 16 grids. For example, if four grids are left after the preparation of a rubber vulcanizate, it means that 12 grids are separated by fibrillation, and therefore the degree of fibrillation is 75%.

The amount of the short fiber per 100 parts by mass of the rubber component is preferably 1 part by mass or more, more preferably 5 parts by mass or more, still more preferably 10 parts by mass or more. An amount of less than 1 part by mass may not sufficiently provide the effect of improving performance on ice. The amount is also preferably 50 parts by mass or less, more preferably 30 parts by mass or less, still more preferably 20 parts by mass or less. When the amount is more than 50 parts by mass, the short fiber may show lower dispersibility, which may make it difficult to adjust the degree of fibrillation as desired.

The rubber vulcanizate used in the present invention preferably contains carbon black as filler. Owing to the reinforcement effect of carbon black, the effects of the present invention can be better achieved.

Non-limiting examples of the carbon black include those usually incorporated in rubber vulcanizates for treads, such as GPF, FEF, HAF, ISAF, and SAF.

The carbon black preferably has a nitrogen adsorption specific surface area ($N_2SA$) of 50 $m^2/g$ or more, more preferably 80 $m^2/g$ or more, still more preferably 100 $m^2/g$ or more. Carbon black having a $N_2SA$ of less than 50 $m^2/g$ tends not to provide sufficient reinforcement. The $N_2SA$ of the carbon black is also preferably 250 $m^2/g$ or less, more preferably 200 $m^2/g$ or less, still more preferably 180 $m^2/g$ or less. Carbon black having a $N_2SA$ of more than 250 $m^2/g$ tends to show lower dispersibility, resulting in deteriorated processability.

The $N_2SA$ of the carbon black is measured in accordance with JIS K 6217-2:2001.

The carbon black preferably has a dibutyl phthalate oil absorption (DBP) of 50 mL/100 g or more, more preferably 100 mL/100 g or more. Carbon black having a DBP of less than 50 mL/100 g tends not to provide sufficient reinforcement. The DBP of the carbon black is also preferably 200 mL/100 g or less, more preferably 135 mL/100 g or less. Carbon black having a DBP of more than 200 mL/100 g tends to show lower dispersibility, resulting in deteriorated processability.

The DBP of the carbon black is measured in accordance with JIS K 6217-4:2001.

The amount of carbon black per 100 parts by mass of the rubber component is preferably 10 parts by mass or more, more preferably 25 parts by mass or more, still more preferably 35 parts by mass or more. An amount of less than 10 parts by mass tends not to provide sufficient reinforcement. The amount is also preferably 100 parts by mass or less, more preferably 80 parts by mass or less, still more preferably 70 parts by mass or less. When the amount is more than 100 parts by mass, the carbon black tends to show lower dispersibility, resulting in deteriorated processability.

The rubber vulcanizate used in the present invention may appropriately contain compounding agents usually used in the tire industry, such as waxes, stearic acid, zinc oxide, antioxidants, and other materials, in addition to the aforementioned components.

The rubber vulcanizate is preferably prepared by a process including: a first final kneading step that includes kneading the rubber component with a vulcanizing agent; and a second final kneading step that includes adding the short fiber to the kneaded mixture obtained in the first final kneading step and kneading them. With this process, it is possible to easily prepare a rubber vulcanizate containing a short fiber with a degree of fibrillation that falls within a predetermined range.

The process for preparing the rubber vulcanizate is described in greater detail below.

(Base kneading step)

Usually, a base kneading step is performed before the first final kneading step. In the base kneading step, the rubber component is kneaded with agents other than those to be added in the first final kneading step and second final kneading step. Examples of such agents that may be added in the base kneading step include fillers, waxes, stearic acid, zinc oxide, and antioxidants.

The kneading in the base kneading step may be performed in any manner, such as using a kneading machine usually used in the rubber industry, e.g. a Banbury mixer or open roll mill, preferably using a Banbury mixer.

The discharge temperature in the base kneading step is preferably 130°C to 170°C, more preferably 140°C to 160°C. When the discharge temperature is lower than the lower limit, the kneading may be insufficient, while when the discharge temperature is higher than the upper limit, degradation of the compounding materials may occur.

The base kneading step preferably includes: a first base kneading step that includes kneading a portion of the rubber component with a portion of the filler; a second base kneading step that includes adding the rest of the rubber component and the rest of the filler to the kneaded mixture obtained in the first base kneading step, and kneading them; and a third base kneading step that includes masticating the kneaded mixture obtained in the second base kneading step.

Preferably, only portions of the rubber component and the filler are kneaded in the first base kneading step, and the aforementioned other agents such as waxes are added and kneaded in the second base kneading step.

(First final kneading step)

In the first final kneading step, the rubber component is kneaded with a vulcanizing agent. When other agents that contribute to the vulcanization reaction (e.g. vulcanization accelerators) are further added, such agents are preferably also kneaded in the first final kneading step.

Examples of the vulcanizing agent include sulfur and alkylphenol-sulfur chloride condensates. Among these, sulfur is preferred. The amount of the vulcanizing agent per 100 parts by mass of the rubber component is preferably 0.1 to 5 parts by mass, more preferably 0.5 to 3 parts by mass.

The kneading in the first final kneading step may be performed in any manner, such as using a kneading machine usually used in the rubber industry, e.g. a Banbury mixer or open roll mill, preferably using an open roll mill.

The discharge temperature in the first final kneading step is preferably 80°C to 120°C, more preferably 90°C to 110°C. When the discharge temperature is lower than the lower limit, the kneading may be insufficient, while when the discharge temperature is higher than the upper limit, degradation of the compounding materials may occur.

(Second final kneading step)

In the second final kneading step, the short fiber is added to the kneaded mixture obtained in the first final kneading step, and they are kneaded.

The kneading in the second final kneading step may be performed in any manner, such as using a kneading machine usually used in the rubber industry, e.g. a Banbury mixer or open roll mill, preferably using an open roll mill.

The termination conditions in the second final kneading step are preferably selected depending on the kneading time. The kneading time in the second final kneading step is preferably 5 to 30 minutes, more preferably 10 to 20 minutes. When the kneading time is less than the lower limit, the kneading may be insufficient, while when the kneading time is more than the upper limit, degradation of the compounding materials may occur.

In the second final kneading step, the total amount of the short fiber may be added at once, but preferably the short fiber is added in multiple portions. This provides uniform fibrillation of the short fiber. The number of portions is preferably, but not limited to, two to five.

(Vulcanization step)

The kneaded mixture (unvulcanized rubber composition) obtained in the second final kneading step is vulcanized in a vulcanizer to prepare a rubber vulcanizate. The vulcanization is usually performed at 160°C to 180°C for 10 to 30 minutes.

The studless winter tire of the present invention may be produced by extruding the unvulcanized rubber composition into the shape of a tread, assembling it with other tire components on a tire building machine by a usual method to form a green tire, and heating and pressurizing the green tire in a vulcanizer.

The studless winter tire of the present invention may be used for, for example, passenger vehicles or trucks and buses (heavy load vehicles), particularly suitably for trucks and buses (heavy load vehicles).

EXAMPLES

The present invention is specifically described with reference to, but not limited to, examples.

The chemicals used in examples and comparative examples are as follows.

NR: RSS#3

BR: BR1220 (cis content: 96% by mass) available from Zeon Corporation

Short fiber: NC-3K (nylon fiber) available from HYOSUNG JAPAN

Carbon black: DIABLACK I (N220, $N_2SA$: 114 $m^2/g$, DBP: 114 mL/100 g) available from Mitsubishi Chemical Corporation

Sulfur: powdered sulfur available from Karuizawa sulfur Co., Ltd.

(Example 1)

A Banbury mixer was charged with 62 parts by mass of NR and 25 parts by mass of carbon black, and they were kneaded and discharged at 150°C (first base kneading step).

Then, the kneaded mixture obtained in the first base kneading step, 38 parts by mass of BR, and 25 parts by mass of carbon black were put in a Banbury mixer, and they were kneaded and discharged at 150°C (second base kneading step).

Thereafter, the kneaded mixture obtained in the second base kneading step was put in a Banbury mixer, kneaded, and discharged at 150°C (third base kneading step).

Next, 1 part by mass of sulfur was added to the kneaded mixture obtained in the third base kneading step, and they were kneaded using an open roll mill and discharged at 100°C (first final kneading step).

Subsequently, 15 parts by mass of the short fiber was added to the kneaded mixture obtained in the first final kneading step, and they were kneaded using an open roll mill (second final kneading step). The short fiber was added in three portions of 5 parts by mass each. The total kneading time was 10 minutes.

Next, the kneaded mixture (unvulcanized rubber composition) obtained in the second final kneading step was shaped into a tread and assembled with other tire components. The assembly was vulcanized at 170°C for 15 minutes to obtain a test studless winter tire (tire size: 11.00R22.5, for heavy load vehicles).

(Example 2)

A test studless winter tire was prepared as in Example 1, except that the kneading time in the second final kneading step was changed to 12 minutes.

(Example 3)

A test studless winter tire was prepared as in Example 1, except that the kneading time in the second final kneading step was changed to 8 minutes.

(Comparative Example 1)

A test studless winter tire was prepared as in Example 1, except that the second final kneading step was not performed.

(Comparative Example 2)

A test studless winter tire was prepared as in Example 1, except that the kneading time in the second final kneading step was changed to 5 minutes.

(Comparative Example 3)

A test studless winter tire was prepared as in Example 1, except that the kneading time in the second final kneading step was changed to 15 minutes or longer.

The test studless winter tires prepared as above were evaluated as follows. Table 1 shows the results.

(Degree of fibrillation)

Specimens were cut out of the tread of each test studless winter tire and examined. The number of remaining grids in the fiber in the specimen was visually determined, and the degree of fibrillation was calculated from the number.

(Performance on ice)

Each set of test studless winter tires was mounted on a front-engine, front-wheel-drive car of 2,000 cc displacement made in Japan. The car was run on ice, and the stopping distance, i.e. the distance required for the car to stop after the brakes that lock up were applied at 35 km/h was measured. The results are expressed as an index using the equation below, with Comparative Example 1 set equal to 100. A higher index indicates better performance on ice (better grip performance on ice).

$$\text{(Index of performance on ice)} = \text{(Stopping distance of Comparative Example 1)}/\text{(Stopping distance of each formulation example)} \times 100$$

[Table 1]

| | | Comparative Example | | | Example | | |
|---|---|---|---|---|---|---|---|
| | | 1 | 2 | 3 | 1 | 2 | 3 |
| Formulation (parts by mass) | NR | 62 | 62 | 62 | 62 | 62 | 62 |
| | BR | 38 | 38 | 38 | 38 | 38 | 38 |
| | Short fiber | — | 15 | 15 | 15 | 15 | 15 |
| | Carbon black | 50 | 50 | 50 | 50 | 50 | 50 |
| | Sulfur | 1 | 1 | 1 | 1 | 1 | 1 |
| Evaluation | Degree of fibrillation (%) | — | 40 | 100 | 70 | 90 | 55 |
| | Index of performance on ice | 100 | 90 | 90 | 160 | 140 | 120 |

The results in Table 1 demonstrate that the performance on ice was significantly improved in Examples 1 to 3 in which a short fiber with a degree of fibrillation that fell within a predetermined range was used.

**Claims**

1. A studless winter tire, comprising a tread formed from a rubber vulcanizate, the rubber vulcanizate comprising:

   a rubber component; and
   a short fiber with a degree of fibrillation of 50 to 95%.

2. The studless winter tire according to claim 1, wherein the short fiber is a nylon fiber.

3. The studless winter tire according to claim 1 or 2,

wherein the short fiber is present in an amount of 1 to 50 parts by mass per 100 parts by mass of the rubber component.

4. A method for producing the studless winter tire according to any one of claims 1 to 3,
   the method comprising preparing the rubber vulcanizate by a process comprising:

   a first final kneading step that includes kneading the rubber component with a vulcanizing agent; and
   a second final kneading step that includes adding the short fiber to a kneaded mixture obtained in the first final kneading step and kneading them.

5. The method according to claim 4,
   wherein in the second final kneading step, the short fiber is added in multiple portions.

## INTERNATIONAL SEARCH REPORT

| International application No. |
| --- |
| PCT/JP2017/002224 |

A. CLASSIFICATION OF SUBJECT MATTER
*C08L21/00*(2006.01)i, *B29D30/52*(2006.01)i, *B60C1/00*(2006.01)i, *C08J3/20* (2006.01)i, *C08K7/02*(2006.01)i

According to International Patent Classification (IPC) or to both national classification and IPC

B. FIELDS SEARCHED

Minimum documentation searched (classification system followed by classification symbols)
C08L1/00-101/14, C08K3/00-13/08, B60C1/00-19/12, C08J3/00-3/28, C08J99/00

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 11-310009 A  (The Yokohama Rubber Co., Ltd.), 09 November 1999 (09.11.1999), claims; paragraphs [0014] to [0038]; tables 1 to 8 (Family: none) | 1-5 |
| X | JP 2004-059629 A  (Sumitomo Rubber Industries, Ltd.), 26 February 2004 (26.02.2004), claims; paragraphs [0010], [0014], [0016] to [0022], [0044] to [0058]; table 1 & US 2004/0019135 A1 claims; paragraphs [0010], [0014], [0016] to [0022], [0045] to [0076]; table 1 & EP 1384600 A2 | 1-5 |

☒ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 February 2017 (17.02.17) | 11 April 2017 (11.04.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/002224

C (Continuation). DOCUMENTS CONSIDERED TO BE RELEVANT

| Category* | Citation of document, with indication, where appropriate, of the relevant passages | Relevant to claim No. |
|---|---|---|
| X | JP 2013-522427 A (Compagnie Generale des Etablissements Michelin, Michelin Recherche et Technique S.A.), 13 June 2013 (13.06.2013), claims; paragraphs [0001], [0011] to [0019], [0053] to [0054], [0064] to [0070]; tables 1 to 2 & WO 2011/113731 A1 claims; page 1, lines 7 to 17; page 3, line 21 to page 5, line 23; page 13, lines 16 to 33; page 16, line 8 to page 17, line 23; tables 1 to 2 & EP 2547726 A1 | 1-5 |
| X | JP 2010-163560 A (Sumitomo Rubber Industries, Ltd.), 29 July 2010 (29.07.2010), claims; paragraphs [0017] to [0028], [0043] to [0053]; table 1 (Family: none) | 1-5 |
| A | JP 10-024704 A (Bridgestone Corp.), 27 January 1998 (27.01.1998), entire text (Family: none) | 1-5 |

Form PCT/ISA/210 (continuation of second sheet) (January 2015)

**EP 3 404 062 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000168315 A